# EUROPÄISCHE PATENTSCHRIFT

(11) **EP 3 984 827 B1**
(45) Veröffentlichungstag und Bekanntmachung des Hinweises auf die Patenterteilung: **07.08.2024**
(21) Anmeldenummer: 21202066.3
(22) Anmeldetag: 12.10.2021
(51) Int. Cl.: B60R 13/00

(54) **AUSSENVERKLEIDUNGSTEIL FÜR EIN KRAFTFAHRZEUG UND VERFAHREN ZUR HERSTELLUNG EINES AUSSENVERKLEIDUNGSTEILS FÜR EIN KRAFTFAHRZEUG**
OUTER LINER SECTION FOR A MOTOR VEHICLE AND METHOD FOR PRODUCING AN OUTER LINING SECTION FOR A MOTOR VEHICLE
PIÈCE D'HABILLAGE EXTÉRIEUR POUR UN VÉHICULE AUTOMOBILE ET PROCÉDÉ DE FABRICATION D'UNE PIÈCE D'HABILLAGE EXTÉRIEUR POUR UN VÉHICULE AUTOMOBILE

(30) Priorität: 16.10.2020 DE 102020006378; 11.12.2020 DE 102020133087
(43) Veröffentlichungstag der Anmeldung: 20.04.2022
(73) Patentinhaber: REHAU Automotive SE & Co. KG, 95111 Rehau (DE)
(72) Erfinder: Göschel, Rick, 95183 Feilitzsch (DE); Koch, Christian, 95448 Bayreuth (DE)

(56) Entgegenhaltungen:
- EP-A1- 3 434 473
- DE-A1- 102007 057 934
- DE-A1- 102014 019 242
- US-A1- 2008 253 140
- US-B2- 10 279 736

## Beschreibung

Die vorliegende Erfindung betrifft ein Außenverkleidungsteil, insbesondere eine Heccklappe, für ein Kraftfahrzeug umfassend:
- einen lichtdurchlässigen Grundkörper aus einem transluzenten oder transparenten Material, welches für Spektralbereiche des sichtbaren Lichts mit einer geringen Absorption durchstrahlbar ist, und
- wenigstens eine auf der bestimmungsgemäßen Sichtseite und/oder auf der der Sichtseite gegenüberliegenden Rückseite des Grundkörpers angeordnete Deckschicht, wobei die Deckschicht eine im Vergleich zu dem Material des Grundkörpers hohe Absorption für Spektralbereiche des sichtbaren Lichts aufweist und hierdurch weitgehend lichtundurchlässig ist,
wobei die Deckschicht schichtdickenreduzierte Bereiche und/oder Durchbruchsbereiche aufweist, wobei die Deckschicht aufgrund der reduzierten Schichtdicke oder aufgrund der Durchbruchsbereiche in diesen Bereichen für Spektralbereiche des sichtbaren Lichts mit einer geringen Absorption durchstrahlbar gemacht ist, sodass der Grundkörper partiell durchleuchtbar ist.

Bei einer aus dem Stand der Technik der DE 197 07 614 C2 bekannten Fahrzeugteil wird ein lichtdurchlässiger Grundkörper aus einem transluzenten oder transparenten Material, welches für Spektralbereiche des sichtbaren Lichts mit einer geringen Absorption durchstrahlbar ist, auf der Rückseite beschichtet. Das Fahrzeugteil bleibt hierbei lokal oder vollständig semi-transparent.

Ein derartiges Fahrzeugteil zeigt jedoch bei einer Hinterleuchtung keine randscharfen Konturen und keine gleichmäßige Lichtverteilung. Ein gattungsgemäßes Außenverkleidungsteil kann der DE 10 2007 057 934 A1, und weitere Außenverkleidungsteile können den Dokumenten US 2008/253140 A1, US 10 279 736 B2 und EP 3 434 473 A1 entnommen werden.

Die Erfindung stellt sich daher die Aufgabe ein Außenverkleidungsteil, insbesondere eine Heckklappe, mit den eingangs beschriebenen Merkmalen anzugeben, die gegenüber dem Stand der Technik eine verbesserte Abstahlungscharakteristik bei einer Hinterleuchtung aufweist.

Erfindungsgemäß wird diese Aufgabe gelöst, durch ein Außenverkleidungsteil, insbesondere eine Heckklappe, für ein Kraftfahrzeug umfassend:
- einen lichtdurchlässigen Grundkörper aus einem transluzenten oder transparenten Material, welches für Spektralbereiche des sichtbaren Lichts mit einer geringen Absorption durchstrahlbar ist, und
- wenigstens eine auf der bestimmungsgemäßen Sichtseite und/oder auf der der Sichtseite gegenüberliegenden Rückseite des Grundkörpers angeordnete Deckschicht, wobei die Deckschicht eine im Vergleich zu dem Material des Grundkörpers hohe Absorption für Spektralbereiche des sichtbaren Lichts aufweist und hierdurch weitgehend lichtundurchlässig ist,
wobei die Deckschicht schichtdickenreduzierte Bereiche und/oder Durchbruchsbereiche aufweist, wobei die Deckschicht aufgrund der reduzierten Schichtdicke oder aufgrund der Durchbruchsbereiche in diesen Bereichen für Spektralbereiche des sichtbaren Lichts mit einer geringen Absorption durchstrahlbar gemacht ist, sodass der Grundkörper partiell durchleuchtbar ist, wobei diese Bereiche Lichtaustrittsbereiche definieren, die ein Markenemblem oder einen Schriftzug bilden, wobei auf der Sichtseite des Grundkörpers, über diesen Bereichen eine separates Dekorelement oder mehrere separate Dekorelemente angeordnet ist oder sind, das oder welche die Lichtaustrittsbereiche vollständig oder teilweise abdeckt oder abdecken, wobei das Dekorelement oder die Dekorelemente ebenfalls aus einem transluzenten oder transparenten Material besteht oder bestehen, welches für Spektralbereiche des sichtbaren Lichts mit einer geringen Absorption durchstrahlbar ist. Durch das erfindungsgemäße Vorsehen eines durchstrahlbaren Dekorelements wird das aus dem Grundkörper austretende Licht homogenisiert und hierdurch die Abstahlungscharakteristik des Lichts bei einer Hinterleuchtung wesentlich verbessert.

Auf der, der Kontaktfläche zum Grundkörper gegenüberliegenden Seite des Dekorelements oder der Dekorelemente ist eine Dekorbeschichtung vorgesehen. Die Dekorbeschichtung ist so ausgebildet, dass diese weiterhin für Spektralbereiche des sichtbaren Lichts mit einer geringen Absorption durchstrahlbar ist. Durch eine Dekorbeschichtung wird der Effekt der Homogenisierung des austretenden Lichts noch weiter verstärkt.

Das Dekorelement oder die Dekorelemente ist oder sind zumindest bereichsweise als eine Streulinse ausgebildet. Eine entsprechende Ausgestaltung des Dekorelementes oder der Dekorelemente dient ebenfalls einer weiteren Verbesserung der Abstrahlungscharakteristik und der Homogenisierung des Lichtaustritts.

Die Dekorbeschichtung ist eine dünne Metallbeschichtung. Die Metallbeschichtung kann insbesondere eine Chromschicht umfassen.

Die Deckschicht kann durch eine Lackschicht, durch mehrere Lackschichten und/oder durch eine Deckfolie gebildet sein.

Der Grundkörper weist bevorzugt eine Wandstärke im Bereich von 0,6 mm bis 4 mm auf. Das transluzente oder transparente Material des Grundkörpers oder des Dekorelementes kann bevorzugt Polypropylen und/oder Polycarbonat und/oder Polyethylenterephthalat und/oder Acrylnitril-Butadien-Styrol und/oder Polymethylmethacrylat und/oder Polyamid enthalten oder hieraus gebildet sein.

Die Erfindung umfasst weiterhin ein System aus einem Außenverkleidungsteil, insbesondere einer Heckklappe, wie vorstehend beschrieben und wenigstens einem hinter der bestimmungsgemäßen Sichtseite des Grundkörpers angeordneten Leuchtelement.

Ein Verfahren außerhalb des Schutzumfangs der Patentansprüche zur Herstellung eines Außenverkleidungsteils, insbesondere einer Heccklappe, für ein Kraftfahrzeug wie vorstehend beschrieben, umfassend die folgenden Schritte:
- Bereitstellen eines lichtdurchlässigen Grundkörpers aus einem transluzenten oder transparenten Material, welches für Spektralbereiche des sichtbaren Lichts mit einer geringen Absorption durchstrahlbar ist, und
- Aufbringen wenigstens einer Deckschicht auf der bestimmungsgemäßen Sichtseite und/oder auf der der Sichtseite gegenüberliegenden Rückseite des Grundkörpers, wobei die Deckschicht eine im Vergleich zu dem Material des Grundkörpers hohe Absorption für Spektralbereiche des sichtbaren Lichts aufweist und hierdurch weitgehend lichtundurchlässig ist,
wobei die Deckschicht schichtdickenreduzierte Bereiche und/oder Durchbruchsbereiche aufweist, und die Deckschicht aufgrund der reduzierten Schichtdicke oder aufgrund der Durchbruchsbereiche in diesen Bereichen für Spektralbereiche des sichtbaren Lichts mit einer geringen Absorption durchstrahlbar gemacht ist, sodass der Grundkörper partiell durchleuchtbar ist, wobei diese Bereiche Lichtaustrittsbereiche definieren, die ein Markenemblem oder einen Schriftzug bilden, wobei auf der Sichtseite des Grundkörpers, über diesen Bereichen ein separates Dekorelement oder mehrere separate Dekorelemente angeordnet wird oder werden, das oder welche die Lichtaustrittsbereiche vollständig oder teilweise abdeckt oder abdecken.

Das Dekorelement oder die Dekorelemente kann oder können ebenfalls aus einem transluzenten oder transparenten Material besteht oder bestehen, welches für Spektralbereiche des sichtbaren Lichts mit einer geringen Absorption durchstrahlbar ist. Auf der, der Kontaktfläche zum Grundkörper gegenüberliegenden Seite des Dekorelements oder der Dekorelemente kann eine Dekorbeschichtung vorgesehen sein. Die Dekorbeschichtung kann so ausgebildet sein, dass diese weiterhin für Spektralbereiche des sichtbaren Lichts mit einer geringen Absorption durchstrahlbar ist.

Bei der Herstellung einer Mehrzahl von Außenverkleidungsteilen, insbesondere Heckklappen, können voneinander unterschiedlich ausgebildete Dekorelemente verwendet werden oder vorgesehen sein, und die schichtdickenreduzierten Bereiche und/oder die Durchbruchsbereiche können in Abhängigkeit zu dem jeweiligen Dekorelement in ihrer Position auf dem Grundkörper und/oder in den Abmessungen bei den jeweiligen Außenverkleidungsteilen, insbesondere Heckklappen, variierend ausgebildet werden.

Das Dekorelement oder die Dekorelemente können mittels eines generativen Herstellungsverfahrens, insbesondere mittels einer 3D-Drucktechnik hergestellt und/oder teilweise hergestellt werden. Alternativ ist eine Herstellung im Spritzguss möglich.

Das Außenverkleidungsteil kann eine Heckklappe, oder eine Seitentür, oder eine Stoßfängerverkleidung, oder eine Dachverkleidung, oder eine Schwellerverkleidung sein.

Im Folgenden wird die Erfindung anhand einer lediglich Ausführungsbeispiele darstellenden Zeichnungen erläutert. Es zeigen schematisch:
Fig. 1 eine dreidimensionale Darstellung einer an einem Kraftfahrzeug befindlichen Heckklappe und noch nicht angeordneten Dekorelemente;
Fig. 2 eine Darstellung gemäß Fig. 1 mit auf dem Grundkörper der Heckklappe angeordneten Dekorelementen;
Fig. 3a eine erste Querschnittsdarstellung gemäß der Schnittlinie A-A aus Fig. 2;
Fig. 3b eine weitere Querschnittsdarstellung gemäß der Schnittlinie A-A aus Fig. 2 mit einem hinter der bestimmungsgemäßen Sichtseite des Grundkörpers angeordneten Leuchtelement;
Fig. 4a eine weitere Querschnittsdarstellung einer erfindungsgemäßen Heckklappe;
Fig. 4b eine weitere Querschnittsdarstellung gemäß Fig. 4a mit einem hinter der bestimmungsgemäßen Sichtseite des Grundkörpers angeordneten Leuchtelement.

In den Figuren werden gleiche oder funktionsgleiche Elemente mit den gleichen Bezugszeichen versehen.

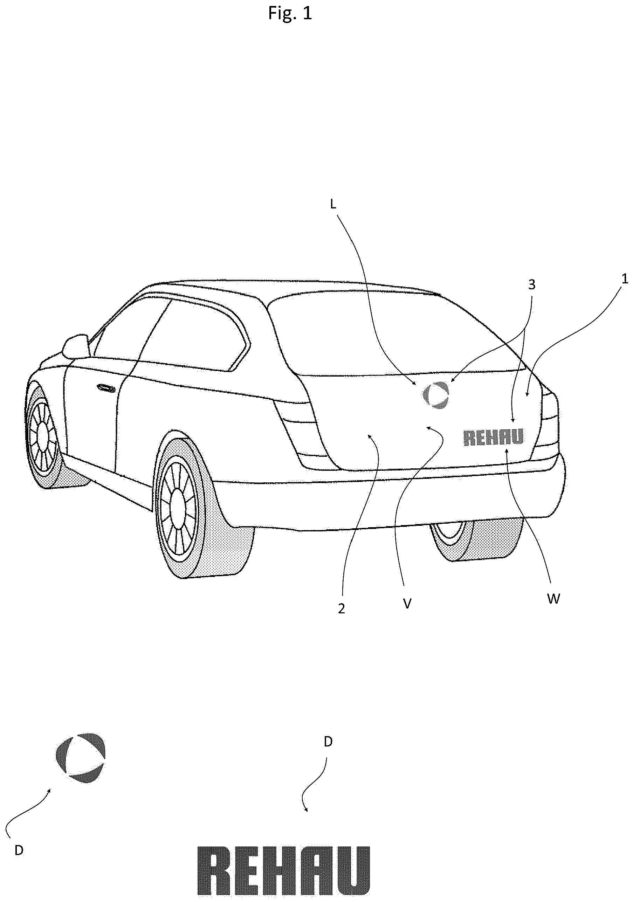

Die Fig. 1 zeigt eine dreidimensionale Darstellung einer an einem Kraftfahrzeug befindlichen Außenverkleidungsteils in Gestalt einer Heckklappe. Die Heckklappe für ein Kraftfahrzeug umfasst einen lichtdurchlässigen Grundkörper 1 aus einem transluzenten oder transparenten Material, welches für Spektralbereiche des sichtbaren Lichts mit einer geringen Absorption durchstrahlbar ist. Auf dem Grundkörper 1 ist wenigstens eine auf der bestimmungsgemäßen Sichtseite V und/oder auf der der Sichtseite V gegenüberliegenden Rückseite R des Grundkörpers 1 angeordnete Deckschicht 2 angeordnet. Die Deckschicht 2 weist eine im Vergleich zu dem Material des Grundkörpers 1 hohe Absorption für Spektralbereiche des sichtbaren Lichts auf und ist hierdurch weitgehend lichtundurchlässig. Die Deckschicht 2 weist schichtdickenreduzierte Bereiche 3 und/oder Durchbruchsbereiche 3 auf, wobei die Deckschicht 2 aufgrund der reduzierten Schichtdicke oder aufgrund der Durchbruchsbereiche 3 in diesen Bereichen 3 für Spektralbereiche des sichtbaren Lichts mit einer geringen Absorption durchstrahlbar gemacht ist, sodass der Grundkörper 1 partiell durchleuchtbar ist. In der Fig. 1 ist erkennbar, dass diese Bereiche 3 Lichtaustrittsbereiche definieren, die ein Markenemblem L oder einen Schriftzug W bilden. In der Fig. 1 sind zusätzlich separate Dekorelemente D dargestellt.

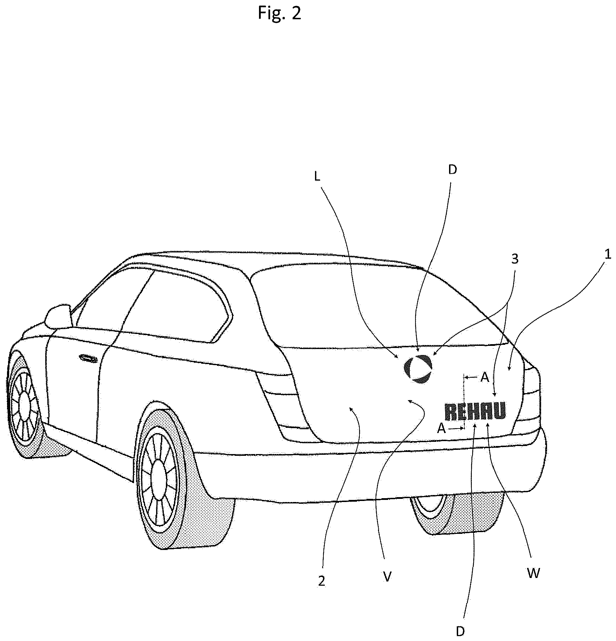

In Fig. 2 ist erkennbar, wie auf der Sichtseite V des Grundkörpers 1 über diesen Bereichen 3 (den schichtdickenreduzierte Bereiche 3 und/oder Durchbruchsbereiche 3 welche die Lichtaustrittsbereiche definieren) die separaten Dekorelemente D angeordnet sind. Diese Dekorelemente D decken die Lichtaustrittsbereiche vollständig oder teilweise ab. Die Dekorelemente D bestehen ebenfalls aus einem transluzenten oder transparenten Material, welches für Spektralbereiche des sichtbaren Lichts mit einer geringen Absorption durchstrahlbar ist.

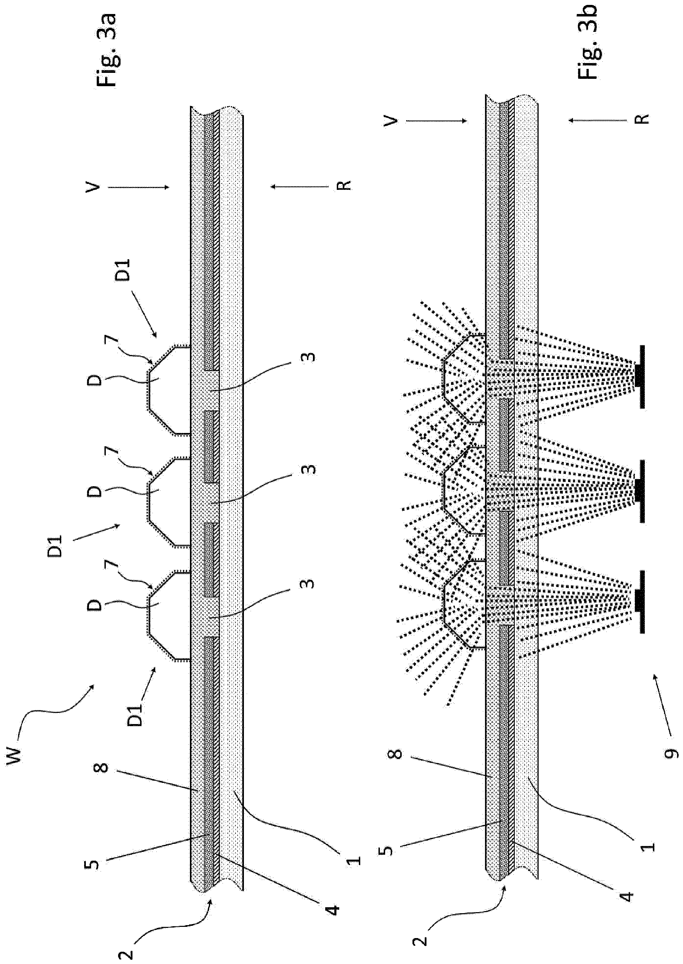

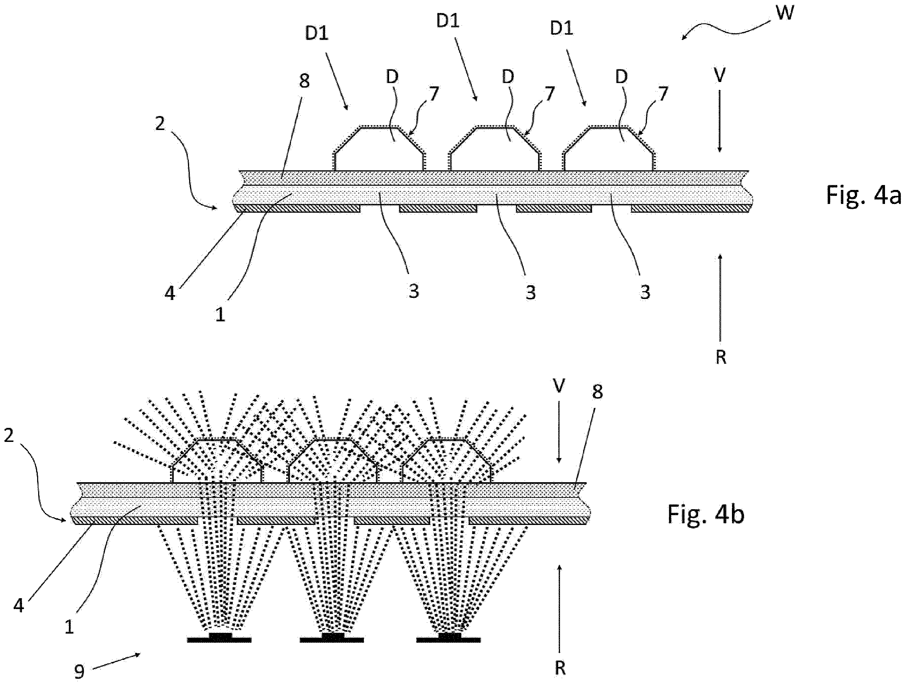

In der Fig. 3a ist die Querschnittsdarstellung gemäß der Schnittlinie A-A aus Fig. 2 dargestellt. Hier ist noch einmal im Detail erkennbar, dass die Heckklappe einen lichtdurchlässigen Grundkörper 1 umfasst aus einem transluzenten oder transparenten Material, welches für Spektralbereiche des sichtbaren Lichts mit einer geringen Absorption durchstrahlbar ist. Auf der bestimmungsgemäßen Sichtseite V des Grundkörpers 1 ist eine Deckschicht 2 angeordnet. Die Deckschicht 2 weist eine im Vergleich zu dem Material des Grundkörpers 1 hohe Absorption für Spektralbereiche des sichtbaren Lichts auf und ist hierdurch weitgehend lichtundurchlässig. Die Deckschicht 2 ist mehrschichtig durch mehrere Lackschichten 4, 5 gebildet, nämlich eine Grundierung 4 und eine farbgebende Schicht 5. Diese Deckschicht 2 weist Durchbruchsbereiche 3 auf, wobei die Deckschicht 2 aufgrund der Durchbruchsbereiche 3 in diesen Bereichen 3 für Spektralbereiche des sichtbaren Lichts mit einer geringen Absorption durchstrahlbar gemacht ist, sodass der Grundkörper 1 partiell durchleuchtbar ist. Die Deckschicht 2 und die Durchbruchsbereiche 3 sind zusätzlich mit einer transparenten Klarlackschicht 8 versiegelt. Die Bereiche 3 definieren Lichtaustrittsbereiche, die ein Markenemblem L oder (wie in diesem konkreten Fall der Schnittdarstellung) einen Schriftzug W bilden. Auf der Sichtseite V des Grundkörpers 1 sind über diesen Bereichen 3 mehrere separate Dekorelemente D angeordnet, welche die Lichtaustrittsbereiche vollständig oder teilweise abdecken. Die Dekorelemente D bestehen ebenfalls aus einem transluzenten oder transparenten Material, welches für Spektralbereiche des sichtbaren Lichts mit einer geringen Absorption durchstrahlbar ist. Die Fig. 4a zeigt eine ähnliche Schnittdarstellung, die sich jedoch dahingehend unterscheidet, dass die Deckschicht 2 auf der der Sichtseite V gegenüberliegenden Rückseite R des Grundkörpers 1 angeordnet ist. In der Fig. 3a und Fig. 4a ist auch erkennbar, dass auf der, der Kontaktfläche zum Grundkörper 1 gegenüberliegenden Seite D1 der Dekorelemente D eine Dekorbeschichtung 7 vorgesehen ist und die Dekorbeschichtung 7 so ausgebildet ist, dass diese weiterhin für Spektralbereiche des sichtbaren Lichts mit einer geringen Absorption durchstrahlbar ist.

In der Fig. 3b oder Fig. 4b ist das gesamte System aus einer Heckklappe und wenigstens einem hinter der bestimmungsgemäßen Sichtseite V des Grundkörpers 1 angeordneten Leuchtelement 9 in einer Schnittdarstellung dargestellt. In dieser Fig. 3b und in Fig. 4b ist erkennbar, dass die Dekorelemente D zumindest bereichsweise als eine Streulinse ausgebildet sind. Die Dekorbeschichtungen 7 können dünne Metallbeschichtungen sein.

Der Grundkörper 1 kann für alle gezeigten Varianten eine Wandstärke im Bereich von 0,6 mm bis 4 mm aufweisen.

Ein Verfahren außerhalb des Schutzumfangs der Patentansprüche zur Herstellung einer vorstehend in den Ausführungsbeispielen beschriebenen Heckklappe für ein Kraftfahrzeug kann die folgenden Schritte umfassen:
- Bereitstellen eines lichtdurchlässigen Grundkörpers 1 aus einem transluzenten oder transparenten Material, welches für Spektralbereiche des sichtbaren Lichts mit einer geringen Absorption durchstrahlbar ist, und
- Aufbringen wenigstens einer Deckschicht 2 auf der bestimmungsgemäßen Sichtseite V und/oder auf der der Sichtseite V gegenüberliegenden Rückseite R des Grundkörpers 1, wobei die Deckschicht 2 eine im Vergleich zu dem Material des Grundkörpers 1 hohe Absorption für Spektralbereiche des sichtbaren Lichts aufweist und hierdurch weitgehend lichtundurchlässig ist,
wobei die Deckschicht 2 schichtdickenreduzierte Bereiche 3 und/oder Durchbruchsbereiche 3 aufweist, und die Deckschicht 2 aufgrund der reduzierten Schichtdicke oder aufgrund der Durchbruchsbereiche 3 in diesen Bereichen 3 für Spektralbereiche des sichtbaren Lichts mit einer geringen Absorption durchstrahlbar gemacht ist, sodass der Grundkörper 1 partiell durchleuchtbar ist. Diese Bereiche 3 definieren Lichtaustrittsbereiche, die ein Markenemblem L oder einen Schriftzug W bilden, wobei auf der Sichtseite V des Grundkörpers 1, über diesen Bereichen 3 ein separates Dekorelement D oder mehrere separate Dekorelemente D angeordnet wird oder werden, das oder welche die Lichtaustrittsbereiche vollständig oder teilweise abdeckt oder abdecken, wobei das Dekorelement D oder die Dekorelemente D ebenfalls aus einem transluzenten oder transparenten Material besteht oder bestehen, welches für Spektralbereiche des sichtbaren Lichts mit einer geringen Absorption durchstrahlbar ist. Auf der, der Kontaktfläche zum Grundkörper 1 gegenüberliegenden Seite D1 des Dekorelements D oder der Dekorelemente D kann eine Dekorbeschichtung 7 vorgesehen sein und die Dekorbeschichtung 7 kann so ausgebildet sein, dass diese weiterhin für Spektralbereiche des sichtbaren Lichts mit einer geringen Absorption durchstrahlbar ist. Bei der Herstellung einer Mehrzahl von Heckklappen können voneinander unterschiedlich ausgebildete Dekorelemente D verwendet werden, und die schichtdickenreduzierten Bereiche 3 und/oder die Durchbruchsbereiche 3 können in Abhängigkeit zu dem jeweiligen Dekorelement 3 in ihrer Position auf dem Grundkörper 1 und/oder in den Abmessungen bei den jeweiligen Heckklappen variierend ausgebildet werden.

Das Dekorelement D oder die Dekorelemente D können mittels eines generativen Herstellungsverfahrens, insbesondere mittels einer 3D-Drucktechnik hergestellt und/oder teilweise hergestellt werden.

## Patentansprüche

1. Außenverkleidungsteil, insbesondere Heckklappe, für ein Kraftfahrzeug umfassend:
- einen lichtdurchlässigen Grundkörper (1) aus einem transluzenten oder transparenten Material, welches für Spektralbereiche des sichtbaren Lichts mit einer geringen Absorption durchstrahlbar ist, und
- wenigstens eine auf der bestimmungsgemäßen Sichtseite (V) und/oder auf der der Sichtseite (V) gegenüberliegenden Rückseite (R) des Grundkörpers (1) angeordnete Deckschicht (2), wobei die Deckschicht (2) eine im Vergleich zu dem Material des Grundkörpers (1) hohe Absorption für Spektralbereiche des sichtbaren Lichts aufweist und hierdurch weitgehend lichtundurchlässig ist,
wobei die Deckschicht (2) schichtdickenreduzierte Bereiche (3) und/oder Durchbruchsbereiche (3) aufweist, wobei die Deckschicht (2) aufgrund der reduzierten Schichtdicke oder aufgrund der Durchbruchsbereiche (3) in diesen Bereichen (3) für Spektralbereiche des sichtbaren Lichts mit einer geringen Absorption durchstrahlbar gemacht ist, sodass der Grundkörper (1) partiell durchleuchtbar ist,
wobei diese Bereiche (3) Lichtaustrittsbereiche definieren, die ein Markenemblem (L) oder einen Schriftzug (W) bilden, wobei auf der Sichtseite (V) des Grundkörpers 1, über diesen Bereichen (3) eine separates Dekorelement (D) oder mehrere separate Dekorelemente (D) angeordnet ist oder sind, das oder welche die Lichtaustrittsbereiche vollständig oder teilweise abdeckt oder abdecken, wobei das Dekorelement (D) oder die Dekorelemente (D) ebenfalls aus einem transluzenten oder transparenten Material besteht oder bestehen, welches für Spektralbereiche des sichtbaren Lichts mit einer geringen Absorption durchstrahlbar ist,
**dadurch gekennzeichnet, dass**
das Dekorelement (D) oder die Dekorelemente (D) zumindest bereichsweise als eine Streulinse ausgebildet ist oder sind und, dass auf der, der Kontaktfläche zum Grundkörper (1) gegenüberliegenden Seite (D1) des Dekorelements (D) oder der Dekorelemente (D) eine Dekorbeschichtung (7) vorgesehen ist und die Dekorbeschichtung (7) so ausgebildet ist, dass diese weiterhin für Spektralbereiche des sichtbaren Lichts mit einer geringen Absorption durchstrahlbar ist, wobei die Dekorbeschichtung (7) eine dünne Metallbeschichtung ist.

2. Außenverkleidungsteil, insbesondere Heckklappe, nach Anspruch 1, **dadurch gekennzeichnet, dass** die Deckschicht (2) durch eine Lackschicht (5), durch mehrere Lackschichten (5, 8) und/oder durch eine Deckfolie (2) gebildet ist.

3. Außenverkleidungsteil, insbesondere Heckklappe, nach einem der vorstehenden Ansprüche, **dadurch gekennzeichnet, dass** der Grundkörper (1) eine Wandstärke im Bereich von 0,6 mm bis 4 mm aufweist.

4. System aus einem Außenverkleidungsteil, insbesondere einer Heckklappe, nach einem der vorstehenden Ansprüche und wenigstens einem hinter der bestimmungsgemäßen Sichtseite (V) des Grundkörpers (1) angeordneten Leuchtelement (9).

## Claims

1. Exterior trim part, in particular a tailgate, for a motor vehicle, comprising:
- a light-permeable base body (1) made of a translucent or transparent material through which radiation can pass with low absorption in the spectral ranges of visible light, and
- at least one cover layer (2) arranged on the intended visible side (V) and/or on the rear side (R) of the base body (1) opposite the visible side (V), wherein the cover layer (2) has a high absorption for spectral ranges of visible light compared with the material of the base body (1) and is therefore largely opaque,
wherein the cover layer (2) comprise regions (3) of reduced layer thickness and/or aperture regions (3), wherein the cover layer (2) is made permeably by rays with low absorption for spectral ranges of visible light in these regions (3) due to the reduced layer thickness or due to the aperture regions (3), so that the base body (1) is partially transparent,
wherein these regions (3) define light exit regions which form a brand emblem (L) or inscription (W), wherein a separate decorative element (D) or several separate decorative elements (D) are arranged on the visible side (V) of the base body 1 above these regions (3), wherein the decorative element or elements completely or partially cover the light exit regions, wherein the decorative element (D) or elements (D) also consist(s) of a translucent or transparent material which is transmissive for radiation for spectral ranges of visible light with low absorption,
**characterized in that**
the decorative element (D) or the decorative elements (D) is or are configured, at least in sections, as a diverging lens, and **in that** a decorative coating (7) is provided on the side (D1) of the decorative element (D) or the decorative elements (D) opposite the contact surface with the base body (1), and the decorative coating (7) is configured in such a way that it is also transmissive for rays with low absorption for spectral ranges of visible light, wherein the decorative coating (7) is a thin metal coating.

2. Exterior trim part, in particular a tailgate, according to claim 1, **characterized in that** the cover layer (2) is formed by a paint layer (5), by multiple paint layers (5, 8) and/or by a cover film (2).

3. Exterior trim part, in particular a tailgate, according to any one of the preceding claims, **characterized in that** the base body (1) has a wall thickness in the range 0.6 mm to 4 mm.

4. System composed of an exterior trim part, in particular a tailgate, according to any one of the preceding claims, and at least one lighting element (9) arranged behind the intended visible side (V) of the base body (1).

## Revendications

1. Pièce d'habillage extérieur, en particulier hayon, pour un véhicule automobile, comprenant :
- un corps de base (1) perméable à la lumière en un matériau translucide ou transparent qui peut être traversé par un rayonnement, avec une faible absorption pour les domaines spectraux de la lumière visible, et
- au moins une couche de recouvrement (2) disposée sur la face visible (V) conforme à sa destination et/ou sur la face arrière (R) du corps de base (1) opposée à la face visible (V), la couche de recouvrement (2) présentant, comparativement au matériau du corps de base (1), une absorption élevée pour des domaines spectraux de la lumière visible et étant de ce fait en grande partie opaque,
dans laquelle la couche de recouvrement (2) présente des zones (3) à épaisseur de couche réduite et/ou des zones d'ouverture (3), la couche de recouvrement (2) étant rendue apte à être traversée par un rayonnement, avec une faible absorption pour des domaines spectraux de la lumière visible dans ces zones (3) en raison de l'épaisseur de couche réduite ou en raison des zones d'ouverture (3), de telle sorte que le corps de base (1) peut être en partie traversé par la lumière,
dans laquelle ces zones (3) définissent des zones de sortie de lumière qui forment un emblème de marque (L) ou une inscription (W), un élément décoratif (D) séparé ou plusieurs éléments décoratifs (D) séparés étant disposé ou disposés sur la face visible (V) du corps de base 1 au-dessus de ces zones (3), l'élément décoratif ou les éléments décoratifs recouvrant entièrement ou en partie les zones de sortie de lumière, l'élément décoratif (D) ou les éléments décoratifs (D) étant également constitué ou constitués d'un matériau translucide ou transparent qui peut être traversé par un rayonnement, avec une faible absorption pour des domaines spectraux de la lumière visible,
**caractérisée en ce que**
l'élément décoratif (D) ou les éléments décoratifs (D) est ou sont réalisé ou réalisés au moins par endroits sous la forme d'une lentille divergente et **en ce que**, sur la face (D1) de l'élément décoratif (D) ou des éléments décoratifs (D) opposée à la surface de contact avec le corps de base (1), se trouve un revêtement décoratif (7) et le revêtement décoratif (7) est conçu de telle manière qu'il peut en outre être traversé par un rayonnement, avec une faible absorption pour des domaines spectraux de la lumière visible, le revêtement décoratif (7) étant un revêtement métallique mince.

2. Pièce d'habillage extérieur, en particulier hayon, selon la revendication 1, **caractérisée en ce que** la couche de recouvrement (2) est formée par une couche de peinture (5), par plusieurs couches de peinture (5, 8) et/ou par un film de recouvrement (2).

3. Pièce d'habillage extérieur, en particulier hayon, selon l'une des revendications précédentes, **caractérisée en ce que** le corps de base (1) présente une épaisseur de paroi comprise dans la plage de 0,6 mm à 4 mm.

4. Système constitué d'une pièce d'habillage extérieur, en particulier un hayon, selon l'une des revendications précédentes et d'au moins un élément d'éclairage (9) disposé derrière la face visible (V) conforme à sa destination du corps de base (1).
